# EUROPEAN PATENT APPLICATION

(11) **EP 4 397 629 A1**
(43) Date of publication of application: **10.07.2024**
(21) Application number: 24150648.4
(22) Date of filing: 08.01.2024
(51) Int. Cl.: C02F 1/48, C02F 1/461, C02F 1/00, C02F 1/66, C02F 101/20, C02F 103/02

(54) **A WATER TREATMENT UNIT**

(30) Priority: 06.01.2023 GB 202300221
(71) Applicant: International Water Treatment Maritime AS, 3470 Slemmestad (NO)
(72) Inventor: EBBESTAD, Geir Qvam, Slemmestad (NO)
(74) Representative: Rogan, Jack William

(57) **Abstract**

The present invention relates to a water treatment unit for improving the quality of water in a water system and a water treatment system comprising the water treatment unit. The water treatment unit comprises a housing comprising a container, a magnet, a sacrificial anode, and a filter element. The container has an inlet and an outlet configured to allow a flow of water into and out of the container. The magnet is configured to attract ferrous particles and retain the ferrous particles to remove the ferrous particles from the flow of water. The sacrificial anode is configured to provide cathodic protection and scavenge oxygen from the flow of water. The filter element is configured to remove detritus from the flow of water. The magnet, sacrificial anode, and filter element are located within the container.

## Description

### Technical Field

The present invention relates to a water treatment unit for improving the quality of water in a water system.

### Background of the Invention

It is known that water systems in land and marine installations that are used for heating and/or cooling suffer from adverse effects as a result of poor water quality. When poor quality water circulate within a water system, the conditions for corrosion are often present. Corrosion of components of the water system can lead to malfunction of the water system, which can require expensive repairs. Furthermore, corrosion products can coat surfaces of elements within the water system and reduce the efficiency of the heat transfer components.

### Summary

According to an embodiment of the present invention, there is provided a water treatment unit for improving the quality of water in a water system, the water treatment unit comprising a housing comprising a container, the container having an inlet and an outlet configured to allow a flow of water into and out of the container, respectively, a magnet configured to attract ferrous particles and retain the ferrous particles to remove the ferrous particles from the flow of water, a sacrificial anode configured to provide cathodic protection and scavenge oxygen from the flow of water; and a filter element configured to remove detritus from the flow of water, wherein the magnet, sacrificial anode, and filter element are located within the container.

In some embodiments, the container may comprise a splitting element that extends across the container and divides the container into an inlet section and an outlet section, wherein the splitting element may comprise a central aperture configured to allow the flow of water to flow from the inlet section of the container to the outlet section of the container.

In some embodiments, the filter element my be located in the outlet section of the container.

In some embodiments, the filter element may extend from the splitting element into the outlet section of the container. In some embodiments, the filter element may extend from the splitting element to a bottom wall of the container.

In some embodiments, the filter element may be a hollow cylindrical filter element configured such that the flow of water has to pass through the filter element before the flow of water can exits through the outlet.

In some embodiments, the filter element may be a 55 um screen or a 110 um screen. In some embodiments, the filter element may be formed from a stainless steel mesh. In some embodiments, the filter element may be formed by a 1 um bag filter.

In some embodiments, the water treatment unit may further comprise a drain located in the bottom wall of the container, the drain may comprise a drain pipe and a drain valve configured to allow the container to be drained.

In some embodiments, the bottom wall of the container may comprise a collection zone configured to retain detritus that settles on the bottom wall within the filter element in the container.

In some embodiments, the magnet may be located between the inlet and the sacrificial anode.

In some embodiments, the magnet may be attached to a handle extending out of the top of the housing, the handle being configured to remove the magnet from the housing.

In some embodiments, the magnet may extend from the inlet section of the container through the central aperture and into the outlet section of the container.

In some embodiments, the magnet may be formed from neodymium, and optionally, comprises a stainless steel coating.

In some embodiments, the magnet may be between 140 and 1100 mm in length, and optionally has a length of 700 mm.

In some embodiments, the sacrificial anode may extend from the inlet section of the container through the central aperture and into the outlet section of the container.

In some embodiments, the sacrificial anode may be an unmeshed anode.

In some embodiments, the sacrificial anode may be formed from magnesium.

In some embodiments, the water treatment unit may further comprise a flow diverter located in the container and proximate to the inlet, the flow diverter being configured to divert the flow of water toward an inner surface of the container.

In some embodiments, the flow diverter may be configured to induce a vortex in the flow of water in the inlet section to improve separation efficiency.

In some embodiments, the water treatment unit may further comprise a pressure vent located in a top wall of the container, the pressure vent being configured to allow micro bubbles to exit the container.

In some embodiments, the water treatment unit may further comprise an inlet pressure gauge.

In some embodiments, the water treatment unit may further comprise an outlet pressure gauge.

In some embodiments, the water treatment unit may further comprise an amp meter configured to display the anode current as an indication of the functionality of the sacrificial anode.

### Brief Description of the Drawings

So that the invention may be more fully understood, embodiments of the present invention will now be described, by way of example only, with reference to the accompanying drawings, in which:
Fig. 1 shows a schematic perspective view of a water treatment unit;
Fig. 2 shows a schematic perspective cut-away view of the water treatment unit of Fig. 1; and
Fig. 3 shows a schematic view of a water system comprising a water treatment unit.

### Detailed Description

Water systems in land and marine installations that are used for heating and/or cooling suffer from adverse effects resulting from poor water quality. When the quality of the water within a water system is poor, the conditions for corrosion are often present.

The main conditions that allows for corrosion of elements of a water system to take place include the water having a low pH, the water having a high oxygen content, and the water containing a high amount of minerals that lead to a high conductivity.

When these conditions are present, elements of a water system can corrode. Not only can corrosion of elements of the water system cause damage and leaks to the system, but corrosion products can also enter into the water system. These corrosion products can cause wear on other elements, such as pumps, which can reduce the efficiency of the water system. Furthermore, in water systems responsible for the transfer of heat, i.e. heating and/or cooling systems, the corrosion products and sludge can be deposited and can build up on heat transfer elements. This can further reduce the efficiency of the heating and/or cooling water system.

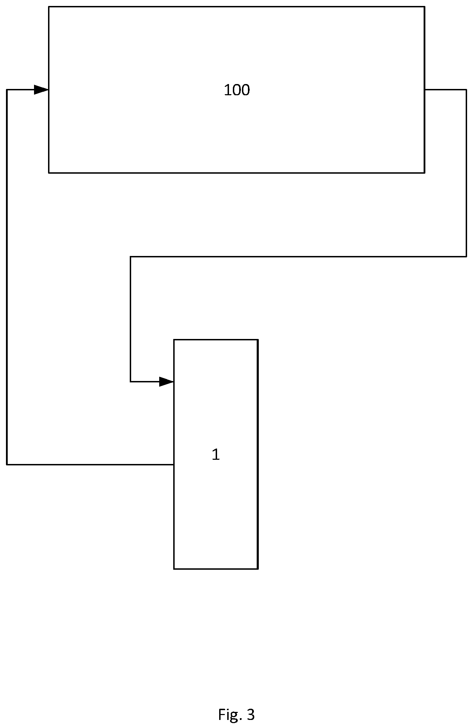

The present invention provides a water treatment unit 1 which improves the quality of the water in a water system 100, shown in Fig. 3. The water system 100 may be a heating and/or cooling system such as, for example, but not limited to, HVAC systems, technical coolers, boilers, heat pumps, solar heating, and underfloor heating. The present invention improves the quality of the water in the water system 100 by increasing the pH of the water in the water system 100, by removing, or scavenging, oxygen from the water in the water system 100, and by removing particles from the water in the water system 100 to lower its conductivity and keep the water clean.

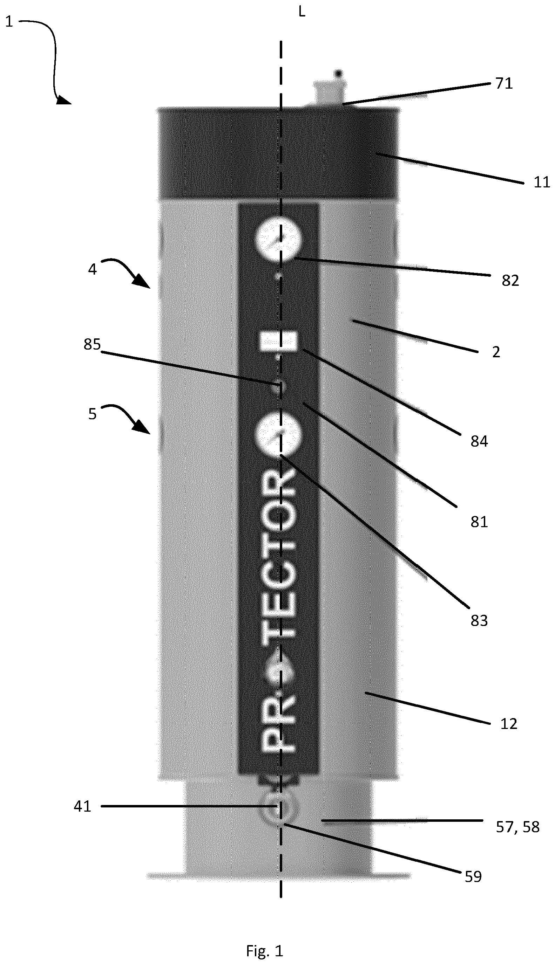

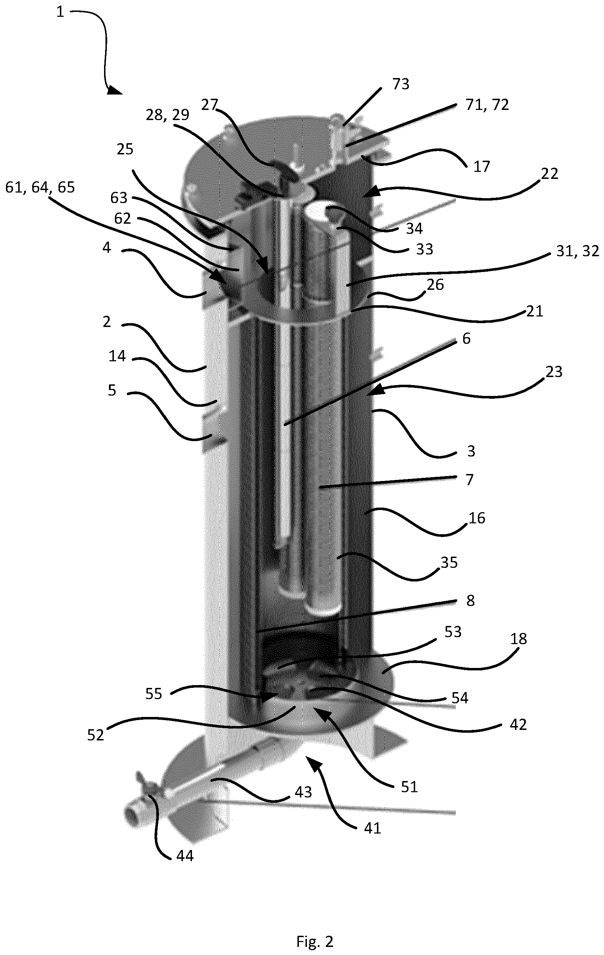

Referring now to Fig. 1 and Fig. 2, there is shown an embodiment of the water treatment unit 1. Fig. 1 shows a schematic perspective view of a water treatment unit, and Fig. 2 shows a schematic perspective cut-away view of the water treatment unit of Fig. 1.

The water treatment unit 1 is configured to improve the quality of water in a water system 100. The water treatment unit 1 comprises a housing 2. The housing 2 is an outer housing. The housing 2 comprises a container 3, shown in Fig. 2. The container 3 comprises an inlet 4 and an outlet 5. The inlet 4 is configured to allow a flow of water into the container 3. The outlet 5 is configured to allow a flow of water out of the container 3.

Referring to Fig. 2, the water treatment unit 1 further comprises a magnet 6. The magnet 6 is configured to attract ferrous particles that are suspended in the flow of water. The magnet 6 is further configured to retain the ferrous particles to remove the ferrous particles from the flow of water through the container. The water treatment unit 1 further comprises a sacrificial anode 7. The sacrificial anode 7 is configured to provide cathodic protection and to scavenge oxygen from the flow of water through the container 3. In addition, the water treatment unit 1 comprises a filter element 8. The filter element 8 is configured to remove detritus from the flow of water. The magnet 6, the sacrificial anode 7, and the filter element 8 are located within the container 3 of the water treatment unit 1.

In the illustrated embodiment of Fig. 1, the housing 2 is generally cylindrical. The housing 2 is also elongate. That is, the length of the housing 2 along its longitudinal axis L is greater than the width or depth of the housing 2. However, it will be appreciated that in alternative embodiments, the housing 2 may take a different form, for example, but not limited to cuboidal or any other polygonal prism.

In some embodiments, the housing 2 may comprise a lid portion 11, or cap 11, and a base portion 12. The lid portion 11 may be removable from the base portion 12 to enable feature of the water treatment unit 1 within the container 3 to be removed for maintenance or to be replaced.

Referring now to Fig. 2, the container 3 is also generally cylindrical in shape. The container 3 is also elongate. That is, the length of the container 3 along its longitudinal axis L is greater than the width or depth of the container 2. However, it will be appreciated that in alternative embodiments, the container 3 may take a different form, for example, but not limited to cuboidal or any other polygonal prism. The longitudinal axes of the housing 2 and the container 3 may coincide. That is, the container 3 may be located centrally within the housing 2. The container 3 may be similar in its dimensions to the housing 2. However it will be appreciated that in alternative embodiments, the shape and dimensions of the container 3 may be different to that of the housing 2.

The water treatment unit 1 may further comprise a layer of insulation 14. The layer of insulation 14 may be configured to prevent the temperature of the water within the container 3 from fluctuating and to prevent against condensation within the container 3. The layer of insulation 14 may be located between the housing 2 and the container 3.

In some embodiments, the housing 2 may be formed by an external shell. The external shell of the housing 2 may be formed by stainless steel. In some embodiments, the layer of insulation 14 may be, for example, but not limited to, Armaflex ^{®} insulation.

The container 3 has the inlet 4 and the outlet 5 configured to allow the flow of water into and out of the container 3, respectively. The container 3 may comprise a cylindrical wall 16. The cylindrical wall 16 may be closed at its top end by a top wall 17. In some embodiments, the top wall 17 may form a part of the cap 11 of the housing 2. In some embodiments, a top portion of the cylindrical wall 16 may also form a part of the cap 11. The cylindrical wall 16 may be closed at its bottom end by a bottom wall 18.

The inlet 4 may be formed by a hole in the cylindrical wall 16. The hole that forms the inlet 4 may also extend through the housing 2, and layer of insulation 14 if present. The outlet 5 may be formed by a hole in the cylindrical wall 16. The hole that forms the outlet may also extend through the housing 2, and layer of insulation 14 if present.

In the depicted embodiment, the inlet 4 is located proximate the top wall 17 of the container 3. The outlet 5 is located further from the top wall 17 that the inlet 4. The outlet 5 may be located approximately half way between the top and bottom walls 17, 18 of the container 3. Thus, any detritus that collects on the bottom wall 18 of the container 3 is less likely to travel up the container 3 and out of the outlet 5 with the flow of water. In some embodiments, the inlet 4 may be aligned vertically above the outlet 5. However, in an alternative embodiment, the inlet 4 may be spaced in the circumferential direction from the outlet 5.

In the present embodiment, the inlet 4 and outlet 5 are shown as being on the same side of the container 3. In some embodiments, the container 3 may comprise a plurality of inlets 4 and a plurality of outlets 5. The plurality of inlets 4 and outlets 5 may be circumferentially spaced around the container 3. The plurality of inlets 4 and outlets 5 may be used simultaneously, but are predominantly provided such that the container 3 can be correctly orientated with the pipe work of an existing water system 100. Therefore, only one inlet 4 and one outlet 5 are required to be connected to the water system 100 and minimal modifications to the water system are required to incorporate the water attachment unit 1. The container 3 may need to be correctly orientated so that a display may be viewed by an engineer, as will be explained in more detail hereinafter.

As shown in Fig. 2, the water treatment unit 1 may further comprise a splitting element 21. That is, the container 3 may comprise a splitting element 21. The splitting element 21 may extend across the container 3. The splitting element 21 may divide the container 3 into an inlet section 22 and an outlet section 23. The inlet section 22 of the container 3 may be located above the splitting element 21. The outlet section 23 of the container 3 may be located below the splitting element 21.

The splitting element 21 may comprise a central aperture 25. The central aperture 25 may be configured to allow the flow of water to flow from the inlet section 22 of the container 3 to the outlet section 23 of the container 3. The central aperture 25 may have its centre aligned with the longitudinal axis L of the container 3. That is, the longitudinal axis L of the container 3 may extend through the centre of the aperture 25. The central aperture 25 may be circular. The circular central aperture 25 may be concentric with the container 3. However, it will be appreciated that in alternative embodiments, the central aperture 25 may take any other shape, such as, for example, but not limited to, triangular, square, or hexagonal.

The splitting element 21 may comprise a peripheral edge 26. The peripheral edge of the splitting element 21 may be configured to abut an inner surface of the cylindrical wall 16 of the container 3. Thus, the peripheral edge 26 of the splitting element 21 may seal against the cylindrical wall 16 of the container 3 such that the flow of water can only leave the inlet section 22 of the container 3 and enter the outlet section 23 of the container 3 via the central aperture 25 in the splitting element 21.

As mentioned above, the water treatment unit 1 comprises a magnet 6. In the embodiment depicted, the water treatment unit 1 comprises a single magnet 6. The magnet 6 is cylindrical in shape. However, it will be appreciated that the magnet 6 may be any other shape. Furthermore, it will be appreciated that in alternative embodiments, the water treatment unit 1 may comprise a plurality of magnets 6.

As shown in Fig. 2, the magnet 6 is located between the inlet 4 and the sacrificial anode 7. Thus, the flow of water that enters the inlet section 22 of the container 3 from the inlet 4 must first flow past the magnet 6 before the sacrificial anode 7. Therefore, any ferrous particles in the flow of water can be removed by the magnet through magnetism before the flow of water reaches the sacrificial anode 7. In the way, the magnet protects the sacrificial anode 7 from ferrous particles in the flow of water.

In some embodiments, the magnet 6 may be attached to a handle 27. The handle 27 may extend out of the top of the housing 2. The handle 27 is configured to allow a maintenance worker to easily remove the magnet 6 through an aperture 28 in the top of the housing 2.

When the magnet 6 is removed from the container 3 using the handle 27, the ferrous particles collected on the magnet 6 may be removed. This may be done manually by wiping the ferrous particles off of the magnet 6 once the magnet 6 is removed.

Alternatively, the aperture 28 through which the magnet 6 is removed may comprise a brush element 29 configured to wipe the ferrous particles off of the magnet 6. The ferrous particles may fall into the container 3 and be removed via another mechanism, as will be described in more detail hereinafter. The brush element 29 may be annular so that it contacts the entire surface of the magnet 6. The brush element 29 may be formed from, for example, but not limited to, silicone or steel.

The magnet 6 may be located in the inlet section 22 of the container 3 and may extend from the inlet section 22 of the container 3 through the central aperture 25 in the splitting element 21 and into the outlet section 23 of the container 23. In some embodiments, the magnet 6 may have a total length over about 600 mm. Thus, the magnet 6 may extend the entire length of the inlet section 22 of the container and may extend over at least half of the length of the outlet section 23. In some embodiments, the total length of the magnet 6 may be in the range of about 140 mm to about 1100 mm, depending on the length of the container 3. In some embodiments, the total length of the magnet may be about 600 mm.

The magnet 6, or at least one magnet, may be a dry magnet. The magnet 6 may be formed from neodymium. Optionally, the magnet 6 may be formed from neodymium with a stainless steel coating. The stainless steel coating increases the durability of the magnet 6 and make maintenance of the magnet 6 easier.

The magnet 6 may be located in a magnet housing 30. The magnet housing 30 may have a similar shape to the magnet 6. That is, the magnet housing 30 may be cylindrical. The magnet housing 30 may be configured to prevent the water in the water treatment unit 1 from contacting the magnet 6. Thus, the magnetic particles may abut the magnetic housing 30 rather than the magnet.

In embodiments where the magnet 6 is housed in a magnet housing 30, the magnet 6 may be removed from the magnet housing 30 and the magnetic particles on the magnetic housing 30 may fall into the water in the container 3. These magnetic particles may then be drained out of the water treatment unit 1, as will be explained in more detail hereinafter.

As shown in Fig. 2, the sacrificial anode 7 is located on the opposite side of the magnet 6 to the inlet 3 to the container. The water treatment unit 1 may comprise a single sacrificial anode 7. In some embodiments, such as the one illustrated, the water treatment unit 1 may comprise a plurality of sacrificial anodes 7. In the present embodiment, the water treatment unit 1 comprises two sacrificial anodes 7.

The sacrificial anode 7 may be located in the inlet section 22 of the container 3 and may extend from the inlet section 22 of the container 3 through the central aperture 25 in the splitting element 21 and into the outlet section 23 of the container 23. In some embodiments, the sacrificial anode 7 may have a total length of between about 140 mm and 1100 mm, depending on the length of the container 3. In some embodiments, the sacrificial anode 7 may have a total length over about 700 mm. Thus, the sacrificial anode 7 may extend almost the whole length of the inlet section 21 of the container 3. A gap having a length in the direction of the longitudinal axis of between about 20 mm and about 40 mm may exist between the top end of the sacrificial anode 7 and the top wall of the container 3.

In some embodiments, the sacrificial anode 7 may extend the entire length of the inlet section 22 of the container 3. The sacrificial anode 7 may extend over at least half of the length of the outlet section 23. The total length of the sacrificial anode 7 may be based on the total length of the water treatment unit 2.

The sacrificial anode 7 may be attached to the container 3 of the water treatment unit 1 by a connecting arm 31. The connecting arm 31 may be configured to provide an electrical connection between the container 3 of the water treatment unit 1, as an cathode, and the sacrificial anode 7.

In the present embodiment, the sacrificial anode 7 may be attached to the splitting element 21 of the container 3. The connecting arm 31 may comprise a first portion 32. The first portion 32 may extend vertically from a surface of the splitting element 21 in the inlet section 22 of the container 3. The connecting arm 31 may comprise a second portion 22. The second portion 33 may extend horizontally from the first portion 32 towards the centre of the container 3. That is, the second portion 33 may extend perpendicularly to the first portion 32. The connecting arm 31 may comprise an attachment portion 34. The attachment portion 34 may be located on the innermost end of the second portion 33. The attachment portion 34 may be configured to hold the sacrificial anode 7.

The sacrificial anode(s) 7 may be formed from a metal alloy with a more 'active' voltage than the material of the features of the water system 100 and the water treatment unit 1. That is, the sacrificial anode(s) 7 may have more negative reduction potential or more positive electrode potential. Thus, the anode 7 is sacrificial in the sense that the anode material is configured to be consumed during the process of improving the quality of the flow of water through the water treatment unit 1. The anode is dissolved in the water, which scavenges oxygen in the water and increase the pH of the water. The oxygen in the water is scavenged by reacting with the material of the sacrificial anode. The products of this reaction provides inorganic salts in the water, which increase the pH of the water. The lower oxygen content and higher pH of the water reduces the reactions taking place between the water and components of the water treatment unit 1 and water system 100.

In the present embodiment, the sacrificial anode(s) 7 may be formed from magnesium. The sacrificial anodes (7) may be formed using high potential magnesium anodes. Alternatively, the sacrificial anode(s) 7 may be formed from, for example, but not limited to, a magnesium alloy, aluminium, an aluminium alloy, zinc, or a zinc alloy.

Thus, the corrosion process may be inhibited within the water treatment unit 1 because the oxygen in the flow of water and the water react with the sacrificial anode 7 instead of the iron and steel elements of the water treatment unit 1 and the water system 100 due to the presence of the more 'active' sacrificial anode(s) 7. This reduces the oxygen content in the flow of water. This also produces reaction products, such as, for example, magnesium hydroxide, which increases the pH level of the water and reduces corrosion.

Furthermore, the use of the magnet 6 and the sacrificial anode(s) 7 may remove minerals and salts from the flow of water, which in turn reduces the conductivity of the flow of water, and thus inhibits corrosion.

In the illustrated embodiment, the sacrificial anodes 7 are meshed sacrificial anodes. That is, the sacrificial anodes 7 are surrounded by a mesh 35. The mesh 35 is configured to act as a filter. That is, the mesh is configured to prevent magnesium oxide formed on the sacrificial anode 7 from entering the water flow. However, it will be appreciated that the sacrificial anodes 7 of the present invention may be unmeshed, i.e. not be surrounded by a mesh. Some of the advantages associated with the unmeshed anodes are less disruption of the flow of water to the sacrificial anodes. Furthermore, in the present invention the sacrificial anodes 7 do not require a mesh because the water treatment unit 1 has a built in filter 8 that is configured to filter out particles and detritus such as any magnesium oxide from the sacrificial anodes 7 in the flow of water.

As shown in Fig. 2, the water treatment unit 1 comprises a filter element 8. In the present embodiment, the filter element 8 is located in the outlet section 23 of the container 3. The filter element 8 may extend from the splitting element 21 down into the outlet section 23 of the container 3. As shown in the illustrated embodiment, the filter element 8 may extend from a surface of the splitting element 21 on the outlet side of the container 3. The filter element 8 may also extend to the bottom wall 18 of the container 3. That is, the filter element 8 may extend along the entire length of the outlet section 23 of the container 3.

The filter element 8 may be a cylindrical filter element 8. That is, the filter element 8 may extend completely around the central aperture 25 in the splitting element 21. Thus, the flow of water into the inlet section 22 of the container 3 may not exit the outlet 5 in the outlet section 23 of the container 3 without passing through the filter element 8. Furthermore, the filter element 8 may extend circumferentially around the magnet 6 and the sacrificial anode(s) 7. Thus, any ferrous particles that come away from the magnet 6 or loose products resulting from a reaction on the sacrificial anode(s) 7 can be filtered out of the flow of water by the filter element 8. Therefore, any material that escapes from the magnet 6 or sacrificial anode(s) 7 can be prevented from exiting the container 3 of the water treatment unit 1 through the outlet 5.

In the present embodiment, the filter element 8 is a hollow cylindrical filter element. That is, the filter element 8 is formed be a filter screen. The filter element 8 may be formed by a 55 um screen or a 110 um screen. In addition, the filter element 8 may be formed from a stainless steel mesh. That is, in the present embodiment, the filter element 8 is formed by a cylindrical stainless steel mesh screen that may have apertures capable of filtering detritus out of the flow of water than are larger than 55 um or 100 um.

The filter element 8 may comprise a double screen arrangement. That is, the filter element 8 may comprise an internal cylindrical mesh and an outer cylindrical mesh that are concentric with each other. The internal and external mesh may have the same or different sized apertures.

In an alternative embodiment, the filter element 8 may be formed by a 1 um bag filter.

As shown in Fig. 2, the water treatment unit 1 may further comprise a drain 41. The drain 41 may be located in the bottom wall 18 of the container 3. That is, the drain 41 may comprise an aperture 42 in the bottom wall 18 of the container 3. By placing the drain 41 at the bottom of the container 3 it is possible to remove all of the water and any products in the water from the container 3.

The drain 41 may comprise a drain pipe 43 and a drain valve 44. The drain pipe 43 may be configured to connect the aperture 42 in the bottom wall 18 of the container 3 to an existing drain manifold or pipe. The aperture 42 may be generally circular, although it will be appreciated that the aperture 42 may take any shape. The drain pipe 43 may comprise a funnel portion, which narrows as it extends away from the aperture 42 in the bottom wall 18 of the container 3. The drain valve 44 may be located along the drain pipe 43. The drain valve may be configured to be opened to allow the container 3 to be drained.

Furthermore, the water treatment unit 1 may comprises a collection zone 51. The collection zone 51 may be located on the bottom wall 18 of the container 3. The collection zone 51 may be a part of and extend from the aperture 42 of the drain 41.

As shown in Fig. 2, the collection zone 51 may be formed partially by the aperture 42 of the drain 41. In addition, the collection zone 51 may comprise a first wall 52 upstanding from the bottom wall 18 of the container 3. The first wall 52 of the collection zone 51 may upstand inside the cylindrical filter element 8. The first wall 52 may extend vertically upwards from the bottom wall 18 of the container 3. The first wall 52 may extend in a circumferential direction to form an annular first wall within the annular filter element 8.

The collection zone 51 may further comprise a second wall 53. The second wall 53 may extend vertically downwards from the bottom wall 18 of the container 3. The second wall 53 may extend in a circumferential direction to form an annular second wall. The second wall 53 may be an extension of the first wall 52 below the bottom wall 18 of the container 3. The collection zone 51 may comprise an end wall 54 located at the end of the second wall 53. The end wall 54 may comprise the aperture 42 of the drain 41.

The collection zone 51 may further comprise at least one opening 55 in the bottom wall 3 of the container 3. The at least one opening 55 may be located within the first annular wall 52. The at least one opening 55 may take any form, such as, but not limited to, circular, semi-circular, or triangular. As shown in Fig. 2, the collection zone 51 may comprise four generally triangular apertures 55 in the bottom wall 18 of the container 3 within the first annular wall 52.

The first wall 52 of the collection zone 51 is configured to direct any particles, or detritus, in the flow of water that fall to the bottom of the container 3 into the collection zone 51. The at least one aperture 55 is configured to allow the particles, or detritus, to fall below the level of the bottom wall 18 of the container 3. This helps to remove the particles, or detritus, from the flow of water and reduces the chance of the particles attempting to move through the filter element 8.

This is especially useful when the water treatment unit 1 is being drained for maintenance. Thus, even if particles or detritus do not exit down the drain 41, they can be prevented from re-entering the flow of water and attempting to pass through the filter element 8.

Referring back to Fig. 1, the water treatment unit 1 may comprise a stand portion 57. The stand portion 57 may be configured to maintain the housing 2 spaced from the ground to accommodate the drain 41 and the collection zone 51. The stand portion 57 may be an extension of the housing 2. The stand portion 57 may comprise a leg 58 that extends circumferentially from the bottom of the housing 2. The leg 58 may be `L-shaped'. The leg 58 may comprise an aperture 59 through which the drain pipe 43 may extend.

Referring back to Fig. 2, the water treatment unit 1 may further comprise a flow diverter 61. The flow diverter 61 may be located in the container 3. The flow diverter 61 may be located proximate to the inlet 4 of the container 3. That is, the flow diverter 61 may be located in the inlet section 22 of the container 3 at least partially covering the inlet 4. The flow diverter 61 may be configured to divert the flow of water toward an inner surface of the cylindrical wall 16 of the container 3.

The flow diverter 61 may be configured to induce a vortex in the inlet section 22 of the container 3 to improve separation efficiency. Thus, by directing the flow of water in a circumferential direction, a proportion of the gas dissolved in the flow of water can be separated from the flow of water. The circumferential flow of water can also help separate detritus from the flow of water by causing the heavier particles to move to the outside of the flow of water, which keeps them away from the sacrificial anode(s) 7.

The flow diverter 61 may surround the inlet 4. That is, the flow diverter 61 may comprise an inner member 62. The inner member 62 may be located closer to the central longitudinal axis of the container 3 than the inlet 4. The inner member 62 may be joined to the cylindrical wall 16 of the container 3 by at least one other member 63. T least one side, or a part of one side, of the flow divert 61 may be left open for the flow of water to flow out of. The flow diverter 61 may create a channel 64 with an opening 65 to divert the flow of water from a radial trajectory towards a more circumferential trajectory.

The water treatment unit 1 may further comprise a pressure vent 71. The pressure vent 71 may be located in the top wall 17 of the container 3. Thee pressure vent 71 may extend from the inner section 22 of the container 3 through the top wall 17 of the container 3, through any layer of insulation 14 present, and through the shell of the housing 2. The pressure vent 71 may be configured to allow gases separated from the flow of water to be vented out of the container 3 when the pressure in the container 3 exceeds a predetermined level. The pressure vent 71 may also allow gases created as a product of the water reacting with the sacrificial anode 7. The gases may be hydrogen. That is, the pressure vent 71 may be configured to allow gases in the form of micro bubbles to exit the container 3.

In some embodiments, the pressure vent 71 may comprise a vent pipe 72 with a vent valve 73. The vent valve 73 may be installed at the end of the vent pipe 72 located outside of the housing 2. The vent valve 73 may be an automatic vent valve configured to open automatically once a predefined pressure threshold has been exceeded.

Referring back to Fig. 1, the water treatment unit 1 may further comprise a display panel 81. The display panel 81 may be located on the outer surface of the housing 2. The display panel 81 may comprise an inlet pressure gauge 82. The inlet pressure gauge 82 may be configured to display the pressure at the inlet 4 to an engineer or maintenance worker. The display panel 81 may comprise an outlet pressure gauge 83. The outlet pressure gauge 83 may be configured to display the pressure at the outlet 5 to an engineer or maintenance worker. A larger difference in the pressure readings of the inlet and outlet pressure gauges 82, 83 may indicate that the filter require cleaning.

The display panel 81 may further comprise an amp meter 84. The amp meter 84 may be configured to display the anode current as an indication of the functionality of the sacrificial anode 7. The amp meter 84 may also indicate the corrosiveness of the flow of water in the container 3. The larger the current in the flow of water, the more minerals present in the flow of water. This may indicate that the magnet 6 requires cleaning or that the sacrificial anode 7 needs replacing. The amp meter 84 may comprise a button 85. The button may be a push button configured to operate the amp meter 84.

Referring to Fig. 2, the water treatment unit 1 can be incorporated into an existing water system 100 or included in a new water system, both schematically represented in Fig. 3. Water from the water system 100 may flow into the container 3 of the water treatment unit 1 via the inlet 4.

When the flow of water enters the inlet 4 to the container 3, it impinges on the flow diverter 71. The flow diverter 61 changed the direction of the flow of water from predominately radial to predominately circumferential. The flow of water is therefore directed towards the cylindrical wall 16 of the container 3.

The change in direction of the flow of water causes turbulence in the flow of water and generates a vortex. Thus, some gases dissolved in the flow of water can be released and vented out of the pressure vent 71 in the top wall 17 of the container 3. In the circumferential flow, some of the heavier particles are thrown outwards towards the cylindrical wall 16 of the container 3 and are thus kept away from the magnet 6 and the sacrificial anode 7.

As the flow of water circles the inlet section 22 of the container 3, it gradually moves towards the central aperture 25 in the splitting element 21. As the flow of water gets closer to the central aperture 25, ferrous particles in the flow of water are attracted to the magnet 6 and removed from the flow of water. Thus, the ferrous particles are unable to rust and build up within the water system 100 and so cannot reduces heat transfer efficiency or cause wear on eater system elements, such as pumps.

Furthermore, any oxygen remaining in the flow of water may react with the sacrificial anode 7. This lowers the oxygen content of the flow of water and inhibits corrosion by removing reactants of the corrosion reaction.

The process of removing ferrous particles and oxygen from the flow of water continues as the flow of water flows through the central aperture 25 of the splitting element 21 and into the outlet section 23 of the container 3.

In order for the flow of water to flow out of the outlet 5 of the container 3, the flow of water must flow through the filter element 8. At this stage, detritus and sludge are filtered out of the flow of water. This removes minerals etc. from the flow of water which reduces the conductivity of the water and further inhibits corrosion.

Once the flow of water has passed through the filter element 8, it is then free to exit the container 3 through the outlet 5. Thus, the water the leaves the water treatment unit 1 is of a better quality than the water that entered the water treatment unit 1 because it has a lower oxygen content, a higher pH, and less mineral content - therefore less conductivity. Each of these parameters help to provide water that is less likely to cause corrosion of the elements of a water system 100.

Furthermore, the water treatment unit 1 is able to improve the quality of the water within the water system 100 without the use of chemicals or external power and with minimum maintenance.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the inventions as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be in the future.

## Claims

1. A water treatment unit for improving the quality of water in a water system; the water treatment unit comprising:
a housing comprising a container, the container having an inlet and an outlet configured to allow a flow of water into and out of the container, respectively;
a magnet configured to attract ferrous particles and retain the ferrous particles to remove the ferrous particles from the flow of water;
a sacrificial anode configured to provide cathodic protection and scavenge oxygen from the flow of water; and
a filter element configured to remove detritus from the flow of water;
wherein the magnet, sacrificial anode, and filter element are located within the container.

2. The water treatment unit according to claim 1, wherein the container comprises a splitting element that extends across the container and divides the container into a inlet section and an outlet section, wherein the splitting element comprises a central aperture configured to allow the flow of water to flow from the inlet section of the container to the outlet section of the container.

3. The water treatment unit according to claim 2, wherein the filter element is located in the outlet section of the container.

4. The water treatment unit according to claim 3, wherein the filter element extends from the splitting element into the outlet section of the container

5. The water treatment unit according to claim 4, wherein the filter element extends from the splitting element to a bottom wall of the container.

6. The water treatment unit according to claim 5, wherein the filter element is a hollow cylindrical filter element configured such that the flow of water has to pass through the filter element before the flow of water can exits through the outlet.

7. The water treatment unit according to any one of claim 4 to claim 6, wherein the filter element is a 55 um screen or a 110 um screen, and optionally,
wherein the filter element is formed from a stainless steel mesh.

8. The water treatment unit according to claim 6, further comprising a drain located in the bottom wall of the container, the drain comprising a drain pipe and a drain valve configured to allow the container to be drained, and optionally,
wherein the bottom wall of the container comprises a collection zone configured to retain detritus that settles on the bottom wall within the filter element in the container.

9. The water treatment unit according to any one of the preceding claims, wherein the magnet is located between the inlet and the sacrificial anode.

10. The water treatment unit according to any one of the preceding claims, wherein the magnet extends from the inlet section of the container through the central aperture and into the outlet section of the container.

11. The water treatment unit according to any one of the preceding claims, wherein magnet is formed from neodymium, and optionally, comprises a stainless steel coating.

12. The water treatment unit according to any one of the preceding claims, wherein the sacrificial anode extends from the inlet section of the container through the central aperture and into the outlet section of the container.

13. The water treatment unit according to any one of the preceding claims, wherein the sacrificial anode is formed from magnesium, and optionally,
wherein the sacrificial anode is an unmeshed anode.

14. The water treatment unit according to any one of the preceding claims, further comprising a flow diverter located in the container and proximate to the inlet, the flow diverter being configured to divert the flow of water toward an inner surface of the container, and optionally,
wherein the flow diverter is configured to induce a vortex in the flow of water in the inlet section to improve separation efficiency.

15. The water treatment unit according to any one of the preceding claims, further comprising a pressure vent located in a top wall of the container, pressure vent configured to allow micro bubbles to exit the container.
